# EUROPÄISCHE PATENTANMELDUNG

(11) **EP 3 219 415 A1**
(43) Veröffentlichungstag der Anmeldung: **20.09.2017**
(21) Anmeldenummer: 16000643.3
(22) Anmeldetag: 16.03.2016
(51) Int. Cl.: B22F 3/105, B29C 67/00

(54) **VERFAHREN UND VORRICHTUNG ZUM GENERATIVEN FERTIGEN EINES DREIDIMENSIONALEN BAUTEILS**

(71) Anmelder: Linde Aktiengesellschaft, 80331 München (DE)
(72) Erfinder: Scholz, Jürgen, 81379 München (DE); Miklos, Ernst, 85551 Kirchheim (DE); Fieret, Jim, Bell Hill, Hook Norton OX15 5PS (GB); Foret, Pierre, 80796 München (DE)
(74) Vertreter: Gellner, Bernd

(57) **Zusammenfassung**

Erfindungsgemäß ist ein Verfahren zum generativen Fertigen eines dreidimensionalen Bauteils vorgesehen. Dieses Verfahren umfasst die folgenden Schritte:
Bereitstellen eines metallischen Ausgangsmaterials,
Zuführen eines Prozessgases zum Ausgangsmaterial,
Schmelzen des Ausgangsmaterials mit einer Wärmequelle,
Kühlen und Verfestigen,
wiederholen der vorstehenden Schritte,
wobei das Prozessgas mittels einer Temperiereinrichtung temperiert wird, um die Temperatur des Bauteils während des Herstellens zu beeinflussen.

## Beschreibung

Die vorliegende Erfindung betrifft ein Verfahren und eine Vorrichtung zum generativen Fertigen eines dreidimensionalen Bauteils.

Mittels generativer Fertigungsverfahren ist es möglich, verschiedenste dreidimensionale Bauteile mit komplexer Geometrie herzustellen.

Beim 3D-Drucken werden beispielsweise dreidimensionale Werkstücke schichtweise aufgebaut. Der Aufbau erfolgt computergesteuert aus einem oder mehreren flüssigen oder festen Werkstoffen nach vorgegebenen Maßen und Formen (CAD). Beim Aufbau finden physikalische oder chemische Härtungs- oder Schmelzprozesse statt. Typische Werkstoffe für das 3D-Drucken sind Kunststoffe, Kunstharze, Keramiken und Metalle. 3D-Drucker werden in der Industrie und der Forschung eingesetzt. Daneben gibt es auch Anwendungen im Heim- und Unterhaltungsbereich sowie in der Kunst.

Der 3D-Druck ist ein generatives beziehungsweise additives Fertigungsverfahren. Die wichtigsten Techniken des 3D-Druckens sind das selektive Laserschmelzen und das Elektronenstrahlschmelzen für Metalle und das selektive Lasersintern für Polymere, Keramik und Metalle, die Stereolithografie und das Digital Light Processing für flüssige Kunstharze und das Polyjet-Modeling sowie das Fused Deposition Modeling für Kunststoffe und teilweise Kunstharze.

Ein weiteres generatives Verfahren ist das punktuelle Aufschmelzen und Erstarren. Bei dieser Art von Verfahren wird Metallpulver oder Metalldraht schichtweise aufgeschmolzen und erstarrt, sodass ein dreidimensionales Bauteil generiert werden kann. Durch die lokal begrenzte Energieeinbringung mittels Laserstrahl ist die Größe des ausgebildeten Schmelzbades gering. Somit besteht die Möglichkeit, filigrane Strukturen zu erzeugen. Entsprechende Verfahren werden als Laser Engineered Net Shaping (LENS), als Direct Metal Deposition (DMD), als Laser Additive Manufacturing (LAM), als Selective Laser Melting (SLM) oder als Laser Metal Deposition (LMD) kommerziell vertrieben.

Beim lokalen Laser-Sintern oder Schmelzen wird zwischen indirekten und direkten Verfahren unterschieden.

Selektives Laser-Sintern (SLS) ist ein Verfahren, um räumliche Strukturen durch Sintern aus einem pulverförmigen Ausgangsstoff herzustellen. Lasersintern ist ein generatives Schichtbauverfahren: das Werkstück wird Schicht für Schicht aufgebaut. Durch die Wirkung der Laserstrahlen können so beliebige dreidimensionale Geometrien auch mit Hinterschneidungen erzeugt werden, z.B. Werkstücke, die sich in konventioneller mechanischer oder gießtechnischer Fertigung nicht herstellen lassen.

Beim selektiven Laser-Sintern (SLS/LMF) wird auf einer Arbeitsfläche (Bauplattform) eine Schicht Pulverwerkstoff aufgetragen. Das lose Pulver wird durch einen Laserstrahl punktuell aufgeschmolzen. Dabei werden die Pulverpartikel je nach verwendetem Werkstoff in der Schicht und mit der darunter liegenden Schicht verbunden. Für die Herstellung metallischer Bauteile können zwei grundsätzliche Entwicklungsrichtungen differenziert werden. Neben der direkten Verfestigung metallischer Pulverwerkstoffe durch Laserstrahlung (direktes Metall-Laser-Sintern) hat sich bereits frühzeitig die Herstellung metallischer Bauteile über eine Kombination aus SLS von Kunstsoff ummanteltem Metallpulver mit nachträglicher thermischer Behandlung (IMLS) etabliert.

Beim direkten Metall-Laser-Sintern (DMLS) werden entweder ein- oder mehrkomponentige Metallwerkstoffe verwendet. Insbesondere werden dabei DMLS-Mehrkomponentenpulver verwendet, die aus verschiedenen Legierungselementen bestehen. Die im Pulver enthaltene niedrig schmelzende Komponente wird durch einen Laserstrahl aufgeschmolzen und umfließt die hochschmelzende Komponente, die als Strukturgeber dient.

Beim Electron Beam Melting (EBM) entspricht der Prozessablauf im Wesentlichen dem der Laser-basierten Verfahren. Loses Metallpulver, im Pulverbett oder über eine Düse, oder Draht wird dabei punktuell aufgeschmolzen, und erstarrt anschließend in der gewünschten Kontur. Die dafür erforderliche Energie wird durch einen Elektronenstrahl eingebracht. Das Verfahren erfolgt meistens in einer Inertgas gefluteten UnterdruckKammer.

Demgemäß werden bei generativen Fertigungsverfahren ein Pulverbett, eine Pulverzuführung oder eine Drahtzuführung verwendet, wobei diese Ausgangsmaterialien dann mittels Laserstrahl, Elektronenstrahl, Plasma-/Lichtbogen aufgeschmolzen und anschließend verfestigt werden. Weiterhin werden bei den generativen Fertigungsverfahren Inert- oder Aktivgase als Prozessgase verwendet.

Ein Ziel bei den vorstehend genannten generativen Fertigungsverfahren ist es, eine möglichst effiziente Energieeinbringung zu gewährleisten, so dass ein sicherer Herstellungsprozess und eine hohe Güte des Bauteiles erzielt werden.

Insbesondere sollen dabei Einflüsse, wie Verzug oder Schwindung, die zu Effekten wie beispielsweise Abplatzungen, Schichtablösung und Materialverlust im Randbereich führen, vermieden oder reduziert werden. Weiterhin sollen induzierte Spannungsextreme aufgrund lokaler Energieeinbringung vermieden werden.

Die Prozessführung bei generativen Fertigungsverfahren wird zudem dadurch erschwert, dass ein sehr enger Grenzbereich zwischen der notwendigen Energiemenge beispielsweise zum Lasersintern bzw. Verschmelzen und der Energiemenge, die beispielsweise zur Bildung von Schmelztropfen führt, vorliegt.

Um die genannten Schwierigkeiten der Energieeinbringung zu beheben, wurden beispielsweise für das DMLS Mehrkomponentenpulver entwickelt, die aus verschiedenen Legierungselementen bestehen. Die im Pulver enthaltene niedrig schmelzende Komponente wird durch den Laserstrahl aufgeschmolzen und umfließt die hochschmelzende Komponente, die als Strukturgeber dient. Die Korngröße und die Ausdehnungskoeffizienten der beteiligten Materialien sind so aufeinander abgestimmt, dass die resultierenden Schwingungen minimiert werden.

In den letzten Jahren wurden Verfahren entwickelt, um die Verarbeitung einkomponentiger Metallwerkstoffe zu verbessern. Entsprechende Verfahren werden beispielsweise unter der Bezeichnung Selective Laser Melting (SLM) oder Lasercusing kommerziell vertrieben.

Bei diesen Verfahren wird versucht, kritische Einflüsse und Vorgänge bei der Energieeinbringung durch geeignete Maßnahmen zu mindern. In diesem Zusammenhang ist die Verwendung einer Substratplatte, auf der das Bauteil fixiert wird, die Prozessführung unter Schutzgasatmosphäre oder die Anwendung neuer Scan-Strategien zur Belichtung des Pulvers mittels Laserenergie bekannt.

Trotz der vorstehend beschriebenen Maßnahmen und Mittel führen die erforderlichen hohen Schmelztemperaturen metallischer Werkstoffe zu ungünstigen Spannungsverhältnissen im Bauteil. Durch die lokale Einbringung hoher Laserenergie werden Spannungen in das Bauteil injiziert. Die sich ergebenden Spannungsquotienten können zur Ablösung zwischen den Schichten oder Verzügen am Bauteil führen und werden häufig auch versucht mittels entsprechender Stützstrukturen reduziert zu werden. Stützstrukturen müssen jedoch anschließend wieder entfernt und das Bauteil zumeist nachbearbeitet werden. Dies ist Zeit- und kostenintensiv.

Aufgabe der vorliegenden Erfindung ist es daher, ein einfaches, sicheres und zuverlässiges Verfahren und eine Vorrichtung zur Temperierung eines dreidimensionalen Objektes beim generativen Herstellen von Bauteilen bereitzustellen.

Diese Aufgabe wird durch die unabhängigen Ansprüche gelöst. Vorteilhafte Ausgestaltungen sind in den Unteransprüchen angegeben.

Erfindungsgemäß ist ein Verfahren zum generativen Fertigen eines dreidimensionalen Bauteils vorgesehen. Dieses Verfahren umfasst die folgenden Schritte:
- Bereitstellen eines metallischen Ausgangsmaterials,
- Zuführen eines Prozessgases zum Ausgangsmaterial,
- Schmelzen des Ausgangsmaterials mit einer Wärmequelle,
- Wiederholen der vorstehenden Schritte.
Das erfindungsgemäße Verfahren zeichnet sich dadurch aus, dass das Prozessgas mittels einer Temperiereinrichtung temperiert wird, um die Temperatur des Bauteils während des Herstellens einzustellen.

Unter einem generativen Fertigen wird im Rahmen der vorliegenden Erfindung das lagen- bzw. schichtweise Aufbauen eines dreidimensionalen Bauteils unter Verwendung eines Pulverbettes, einer Pulverzuführung oder einer Drahtzuführung, welche als Ausgangsmaterial dienen, und mittels Laserstrahl, Elektronenstrahl oder Plasma bzw. Lichtbogen aufgeschmolzen werden, verstanden. Diesbezüglich wird auf die in der Beschreibungseinleitung genannten generativen Fertigungsverfahren (3D-Drucken bzw. bei der Verfestigung durch chemische Aktivatoren, Aufschmelzen und Erstarren (Laser Engineered Net Shaping (LENS), als Direct Metal Deposition (DMD) oder als Laser Additive Manufacturing (LAM)), lokalen Sintern oder Schmelzen, (Laser-Sintern (SLS)) Metall-Laser-Sintern (DMLS), Metall-Laser-Sintern (IMLS), Electron Beam Melting (EBM)) Bezug genommen.

Bei generativen Fertigungsverfahren werden zumeist Wärme- oder Energiequellen verwendet, die an einem bestimmten Punkt einer Schicht bzw. Lage eines herzustellenden Bauteils Energie einbringen. Diese während des Herstellungsprozesses eingebrachte Energie verbleibt in dem aufzubauenden Bauteil und erhöht dessen Temperatur. Wie vorstehend erläutert, ist diese überschüssige Wärme im Bauteil zumeist nachteilig und hat negative Einflüsse auf die Materialeigenschaften. Zudem hat die überschüssige Wärme, die nicht aus dem Bauteil abgeführt wird, einen negativen Einfluss auf den Herstellungsprozess selbst. Dies führt zu Prozessinstabilitäten und einer verminderten Reproduzierbarkeit.

Die Versuche, ein Bauteil während der Herstellung, beispielsweise über Düsen, die gekühlte Gasströme oder kryogene Gasströme direkt auf das Bauteil leiten, zu kühlen, haben sich als nachteilig erwiesen. Bei Anwendungen beispielsweise, die eine Inertgas-Atmosphäre verwenden, aber auch bei anderen generativen Fertigungsverfahren, müssen Turbulenzen im Bereich des Bauteils bzw. in der Prozesskammer vermieden werden. Jede zusätzliche Düse, die kalte Gase oder Partikel oder Fluide mit hoher Geschwindigkeit in die Prozessgas-Atmosphäre eindüst, beeinflusst den Herstellungsprozess negativ.

Bei manchen generativen Herstellungsverfahren, wie z.B. dem LMF-Verfahren (Laser Metal Fusion), wird das Pulverbett in der Prozesskammer durch einen zusätzlichen Kühlstrom negativ beeinflusst.

Da die meisten metallischen Ausgangsmaterialien hochreaktiv sind, muss das Kühlmedium inert sein. Wasser, Luft oder CO₂ können nicht in der Prozesskammer zum Kühlen verwendet werden.

Beim Verwenden einer Drahtzuführung, wobei der Draht oder das Pulver mittels Laser oder Lichtbogen konzentrisch mit den Prozessgas aufgeschmolzen wird, müsste die Verwendung zusätzlicher Kühlströme derart beabstandet bzw. entfernt von dem Bereich, in dem das Objekt hergestellt wird, stattfinden, da derartige Ströme aufgrund ihrer hohen Geschwindigkeit den Prozessgasstrom negativ beeinflussen würden, was zu einer Instabilität des Lichtbogens und entsprechenden Defekten führen würde.

Mittels des erfindungsgemäßen Verfahrens ist die überschüssige Wärme im Bauteil relativ kontrolliert abführbar, so dass nachteilige und negative Einflüsse auf die Materialeigenschaften vermieden werden können.

Indem die überschüssige Wärme kontrolliert aus dem Bauteil abführbar ist, wird der Herstellungsprozess positiv beeinflusst. Dies führt zu einer erhöhten Prozessstabilitäten und einer erhöhten Reproduzierbarkeit.

Das Prozessgas kann vor dem Eintritt in eine Prozesskammer, in der das Bauteil hergestellt wird, temperiert werden. Das das Prozessgas vor dem Eintritt in die Prozesskammer gekühlt wird, wird im Rahmen der vorliegenden Erfindung nicht nur der Eintritt in die Prozesskammer an einer beliebigen Stelle der Prozesskammer sondern auch der Eintritt in eine Düse zum generativen Fertigen, wie sie z.B. bei einem Laser- oder Lichtbogen-Verfahren verwendet werden verstanden.

Dadurch, dass erfindungsgemäß das Prozessgas vor dem Eintritt in die Prozesskammer mittels einer Temperiereinrichtung temperiert wird, um die Temperatur des Bauteils während des Herstellens zu beeinflussen bzw. einzustellen, ist es möglich, den Herstellungsprozess stabil und reproduzierbar auszuführen.

Dadurch werden die vorstehend beschriebenen Nachteile, insbesondere hinsichtlich der Vermeidung von Turbulenzen in der Prozesskammer vermieden.

Das Temperieren kann im Rahmen der vorliegenden Erfindung das Kühlen und/oder das Erwärmen des Prozessgases umfassen.

Beim Kühlen des Prozessgases kann erfindungsgemäß eine Kühlrate von 4K/s bzw. von 6K/s bzw. von 10K/s bzw. von 12K/s bzw. und vorzugsweise von 8K/s vorgesehen sein.

Das Prozessgas kann in der Temperiereinrichtung mit einem Kühlmedium, bspw. einem kryogenen Medium aus einem Vorratsbehälter für kryogenes Medium, beaufschlagt werden, um dieses zu Kühlen. Das kryogene Medium wird derart ausgewählt, dass es mit dem Herstellungsprozess bzw. mit dem Prozessgas chemisch kompatibel ist.

Das Prozessgas kann ein inertes Gas, wie z.B. Argon, Helium, Neon, Krypton, Xenon oder Radon oder ein Aktivgas wie Wasserstoff (H₂), Kohlenmonoxid (CO), Silan, Sauerstoff (O₂), Kohlendioxid (CO₂), Stickstoff (N₂) oder auch Mischungen daraus mit oder ohne reduzierende oder oxidierende Komponenten, umfassen. Demgemäß wird auch ein Schutzgas, wie z.B. ein bei einem Laser- oder Lichtbogen-Verfahren im Bereich der Düse zugeführtes Schutzgas als Prozessgas im Sinne der vorliegenden Erfindung bezeichnet.

Mittels eines kryogenen Mediums ist eine äußerst effiziente Kühlung des Prozessgases möglich.

Als kryogenes Medium können flüssiger Stickstoff, Trockeneis (gefrorenes Kohlendioxid) oder ggf. auch flüssiges Helium, flüssiger Wasserstoff und flüssiger Sauerstoff verwendet werden.

Das Prozessgas kann in der Temperiereinrichtung auch mittels einer Wärmeübertragungseinrichtung gekühlt oder erwärmt werden.

Die Wärmeübertragungseinrichtung kann zur direkten Wärmeübertragung, zur indirekten Wärmeübertragung, zur halbindirekten Wärmeübertragung ausgebildet sein.

Die Führung der Stoffströme kann im Gegenstrom, im Gleichstrom, im Kreuzstrom, im Wirbelstrom oder im Kreuzgegenstrom durchgeführt werden.

In der Wärmeübertragungseinrichtung wird thermische Energie von einem Stoffstrom auf einen anderen übertragen. Das bedeutet, dass dem Prozessgas entweder Wärme entzogen und dieses dadurch gekühlt oder dem Prozessgas Wärme zugeführt und dieses dadurch erwärmt wird.

Die Wärmeübertagungseinrichtung kann auch eines der vorstehend erwähnten kryogenen Medien verwenden, um das Prozessgas zu kühlen.

Mittels der Temperiereinrichtung kann das Prozessgas mit unterschiedlichen Geschwindigkeiten in die Prozesskammer eingebracht werden. Um bspw. Schmauch aus der Prozesskammer auszutreiben kann vorgesehen sein, das Prozessgas schneller in die Prozesskammer einzubringen als während des Herstellungsprozesses.

Das Temperieren kann von einer Steuereinrichtung gesteuert werden. Diese Steuereinrichtung kann eine Temperaturreglereinrichtung mit einem geschlossenen Regelkreis umfassen, die die Temperatur regelt. Die Temperaturreglereinrichtung erfasst mittels zumindest eines Temperatursensors einen Ist-Wert einer Temperatur des Prozessgases und/oder der Prozessgasatmosphäre und/oder des Bauteils und vergleicht diesen mit einem vorgegebenen Sollwert, wobei über ein Stellglied der vorgegebene Sollwert eingestellt wird.

Das zu fertigende Bauteil kann unter anderem aus einem Metall, wie z.B. einem Edelstahl, einer Aluminiumlegierung, einer Nickellegierung, einer Titanlegierung oder einem Matrixmaterial, das metallische und intermetallische Phasen, Keramik oder nicht-metallische Elemente umfasst, oder hitzeempfindliche Kunststoffe umfassen.

Weiterhin ist erfindungsgemäß eine Vorrichtung zum generativen Fertigen von dreidimensionalen Bauteilen Vorgesehen. Diese Vorrichtung umfasst
eine Prozesskammer,
eine Bauplattform auf der ein metallisches Ausgangsmaterial bereitstellbar ist,
eine Prozessgaszuführeinrichtung zum Zuführen eines Prozessgases,
eine Wärmequelle zum Schmelzen des Ausgangsmaterials.
Diese Vorrichtung zeichnet sich dadurch aus, dass eine Temperiereinrichtung zum Temperieren des Prozessgases vorgesehen ist, um die Temperatur des Bauteils während des Herstellens zu beeinflussen.

Die Vorteile der erfindungsgemäßen Vorrichtung entsprechen im Wesentlichen den Vorteilen des erfindungsgemäßen Verfahrens.

Weiterhin kann die Temperiereinrichtung eine Temperierkammer zum Temperieren des Prozessgases umfassen. In der Temperierkammer kann das Prozessgas mit einem Kühlmedium, beispielsweise einem kryogenen Medium aus einem Vorratsbehälter für kryogenes Medium, beaufschlagt werden, um dieses zu kühlen. Hierfür kann in der Temperierkammer eine Düse zum Eindüsen des Kühlmediums in das Prozessgas aufweisen (direkte Wärmeübertragung).

Die Temperiereinrichtung kann auch eine Wärmeübertragungseinrichtung zum Kühlen oder Heizen des Prozessgases umfassen bzw. als eine solche ausgebildet sein.

Als Wärmeübertragungseinrichtung kann ein Rekuperator, wie z.B. ein Plattenwärmeübertrager, ein Spiralwärmeübertrager ein Rohrwärmeübertrager bzw. Rohrbündelwärmeübertrager, ein U-Rohr-Wärmeübertrager, ein Mantelrohrwärmeübertrager, ein Heizregister bzw. Kühlregister oder ein Gegenstrom-Schichtwärmeübertrager oder ein Regenerator oder ein Peltier-Element vorgesehen sein. Derartige Wärmeübertragungseinrichtungen können sofern geeignet im Gegen- oder im Gleichstrom betrieben werden.

Die Temperiereinrichtung kann zum Beschleunigen des Prozessgasstroms eine Ventilatoreinrichtung aufweisen, wobei die Beschleunigung derart erfolgt, dass keine ungewollten Turbulenzen im Bereich des Bauteiles erfolgen.

Die Temperiereinrichtung kann vorzugsweise außerhalb einer Prozesskammer angeordnet sein.

Weiterhin kann vorgesehen sein das Prozessgas über die Prozesskammer zu rezirkulieren.

Weiterhin kann eine Steuereinrichtung zum Steuern der Temperiereinrichtung vorgesehen sein. Die Steuereinrichtung kann eine Temperaturreglereinrichtung mit einem geschlossenen Regelkreis umfassen, die die Temperatur regelt. Die Temperaturreglereinrichtung erfasst mittels zumindest eines Temperatursensors einen Ist-Wert einer Temperatur des Prozessgases und/oder der Prozessgasatmosphäre und/oder des Bauteils und vergleicht diesen mit einem vorgegebenen Sollwert, wobei über ein Stellglied der vorgegebene Sollwert eingestellt wird.

Die Erfindung wird im Folgenden an Hand von zwei Figuren näher erläutert.
- Figur 1: eine schematische Darstellung einer erfindungsgemäßen Vorrichtung mit einer Temperiereinrichtung gemäß einem ersten Ausführungsbeispiel, und
- Figur 2: eine schematische Darstellung einer erfindungsgemäßen Vorrichtung mit einer Temperiereinrichtung gemäß einem zweiten Ausführungsbeispiel.

Im Folgenden wird eine Vorrichtung 1 zum generativen Fertigen und Kodieren eines dreidimensionalen Bauteils beschrieben. Grundsätzlich ist, wie bereits vorstehend erwähnt, jede Vorrichtung zum generativen Fertigen von dreidimensionalen Bauteilen zum Ausführen des erfindungsgemäßen Verfahrens geeignet.

Die Vorrichtung ist eine Laser-Schmelz-Vorrichtung 1 mit Pulverbettzuführung. Die Laser-Schmelz-Vorrichtung 1 umfasst eine Prozesskammer, die durch eine Kammerwandung 3 nach außen hin abgeschlossen ist und einen Prozessraum 4 begrenzt. Die Prozesskammer 2 dient als Bauraum für das dreidimensionale Bauteil 6.

In der Prozesskammer 2 ist ein nach oben offener Behälter angeordnet. In dem Behälter ist eine Bauplattform 5 zur Aufnahme des zu fertigenden Bauteils 6 angeordnet. Die Bauplattform 5 weist eine Höhenverstelleinrichtung (nicht dargestellt) auf, mittels der der Behälter in vertikaler Richtung derart einstellbar ist, dass eine Oberfläche einer neu zu verfestigenden Schicht in einer Arbeitsebene liegt.

Weiterhin umfasst die Vorrichtung 1 einen Vorratsbehälter 7. Der Vorratsbehälter 7 ist zur Aufnahme eines verfestigbaren pulverförmigen Ausgangsmaterials ausgebildet.

Weiterhin ist eine Auftrageinrichtung 8 zum Aufbringen des Ausgangsmaterials auf die Bauplattform 5 vorgesehen. Eine solche Beschichtungseinrichtung ist in horizontaler Richtung parallel zu der Arbeitsebene beweglich.

Zudem ist ein Laser 9 zum Erzeugen eines Laserstrahls vorgesehen. Der Laser bildet eine Wärmequelle 9 zum Schmelzen des Ausgangsmaterials aus. Ein von dem Laser 9 erzeugter Laserstrahl wird über eine Umlenkvorrichtung umgelenkt und durch eine Fokussiereinrichtung (nicht dargestellt) auf einen vorbestimmten Punkt unmittelbar unterhalb der Arbeitsebene fokussiert. Mittels der Umlenkvorrichtung kann der Verlauf des Laserstrahls derart verändert werden, dass er die dem Querschnitt des herzustellenden Objekts entsprechenden Stellen der aufgetragenen Schicht aufschmilzt.

Zudem ist eine Prozessgaszuführeinrichtung 11 vorgesehen, mittels der die Prozesskammer 2 mit einem Prozessgas beaufschlagbar ist.

Die Prozessgaszuführeinrichtung 11 umfasst einen Prozessgasvorratsbehälter 15 für Schutz- oder Prozessgas. Dieser über einen Leitungsabschnitt mit der Prozesskammer 2 verbunden.

Bei entsprechend geeigneten Verfahren, die eine Düse zur Schutz- oder Prozessgaszuführung verwenden, kann dieser Leitungsabschnitt zusätzlich und/oder alternativ auch mit einer Schutzgaszuführung einer entsprechenden Düse verbunden sein.

In diesen Leitungsabschnitt ist eine Temperiereinrichtung 12 zum Temperieren des Prozessgases integriert.

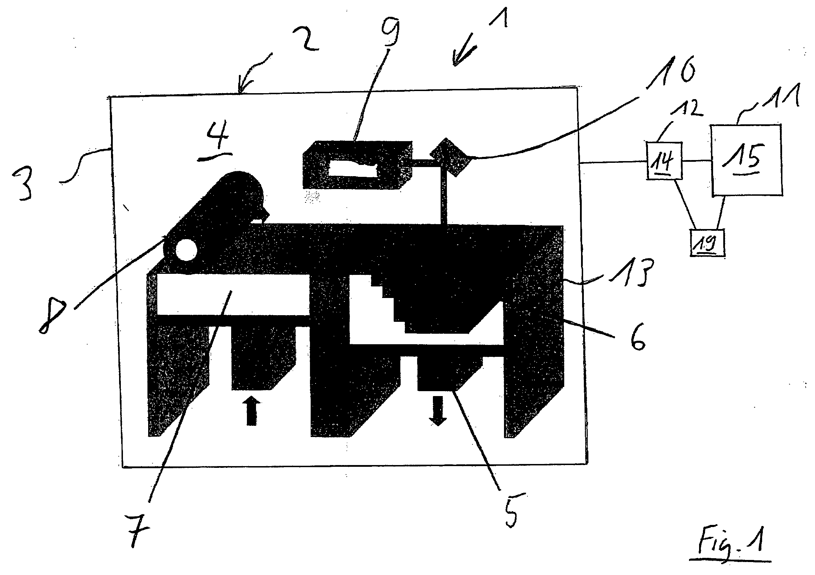

Gemäß einem ersten Ausführungsbeispiel umfasst die Temperiereinrichtung 12 eine Wärmeübertragungseinrichtung 14 bzw. eine Wärmetauschereinrichtung mittels der das Prozessgas temperierbar ist, bevor es in die Prozesskammer 2 eintritt (Figur 1).

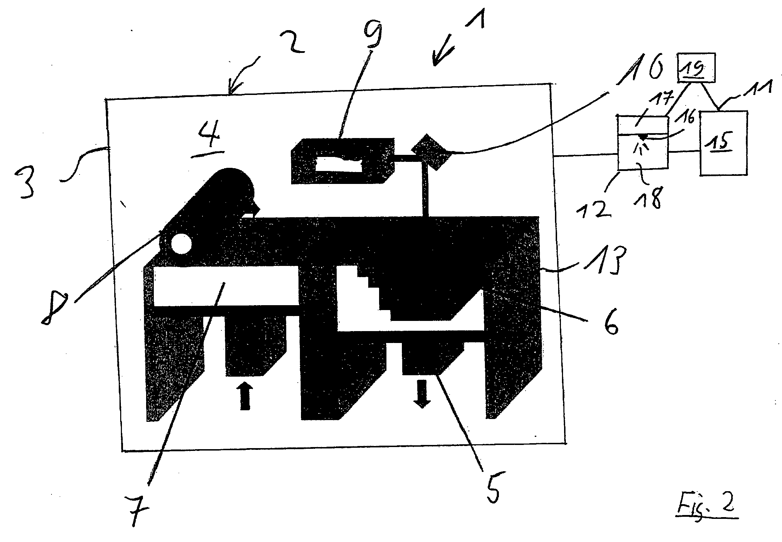

Gemäß einem weiteren Ausführungsbeispiel umfasst die Temperiereinrichtung 12 eine Temperierkammer 18 (Figur 2). In der Temperierkammer 18 ist zumindest eine Düse 16 vorgesehen, die mit einem Vorratsbehälter 17 für ein kryogenes Medium verbunden ist, um cryogenes Medium in die Temperierkammer 18 derart einzudüsen, dass das Prozessgas gekühlt wird.

Somit ist über die Düse 16 der Temperierkammer 18 kryogenes Medium zuführbar. Auf diese Weise lässt sich das Prozessgas und somit das in der Prozesskammer 2 herzustellende Bauteil 6 kühlen.

Weiterhin umfasst die Temperiereinrichtung 11 eine Steuereinrichtung 19 zum Steuern der Temperiereinrichtung vorgesehen sein. Die Steuereinrichtung kann eine Temperaturreglereinrichtung mit einem geschlossenen Regelkreis umfassen, die die Temperatur regelt. Die Temperaturreglereinrichtung kann einen P-Regler, einen I-Regler, einen D-Regler und Kombinationen daraus, wie z.B. einen PID-Regler umfassen. Die Temperaturreglereinrichtung erfasst mittels zumindest eines Temperatursensors einen Ist-Wert einer Temperatur des Prozessgases und/oder der Prozessgasatmosphäre und/oder des Bauteils 6 und vergleicht diesen mit einem vorgegebenen Sollwert, wobei über ein Stellglied der vorgegebene Sollwert eingestellt wird.

Als Wärmeübertragungseinrichtung kann alternativ auch ein Rekuperator, wie z.B. ein Plattenwärmeübertrager, ein Spiralwärmeübertrager ein Rohrwärmeübertrager bzw. Rohrbündelwärmeübertrager, ein U-Rohr-Wärmeübertrager, ein Mantelrohrwärmeübertrager, ein Heizregister bzw. Kühlregister oder ein Gegenstrom-Schichtwärmeübertrager oder ein Regenerator vorgesehen sein.

Im Folgenden wird ein erfindungsgemäßes Verfahren anhand eines ersten Ausführungsbeispiels beschrieben.

Dabei wird im ersten Schritt ein metallisches Ausgangsmaterial auf der Bauplattform 5 in Form eines Pulverbetts mittels der Auftrageinrichtung 8 aufgebracht bzw. bereitgestellt. Alternativ kann das metallische Ausgangsmaterial auch mittels einer Pulverzuführung oder einer Drahtzuführung zugeführt werden.

Anschließend wird in einem zweiten Schritt das Prozessgas aus einem Prozessgasvorratsbehälter 15 der Temperierkammer 18 der Temperiereinrichtung 12 zugeführt und dort temperiert.

Das Prozessgas wird dann in einem nächsten Schritt von der Temperiereinrichtung 12 der Prozesskammer 2 der zugeführt.

Bei einem entsprechend geeigneten Verfahren kann das temperierte Prozessgas zusätzlich und/oder alternativ einer Düse (arc welding gas nozzle, laser metal deposition nozzle) zum Zuführen von Schutz- oder Prozessgas der Wärmequelle 9 zugeführt werden.

In einem nächsten Schritt wird das Ausgangsmaterial mittels des Lasers 9 aufgeschmolzen.

Diese Schritte werden wiederholt.

Das Temperieren wird von einer Steuer- 19 bzw. einer Temperaturreglereinrichtung geregelt, wobei mittels zumindest eines Temperatursensors ein Ist-Wert einer Temperatur des Prozessgases und/oder der Prozessgasatmosphäre und/oder des Bauteils erfasst wird, mit einem vorgegebenen Sollwert verglichen wird und über ein Stellglied der vorgegebene Sollwert eingestellt wird.

Um den Sollwert zu erreichen wir in einem Zwischenschritt je nach Bedarf ein kryogenes Medium aus einem Vorratsbehälter für cryogens Medium in die Temperierkammer eingedüst und auf diese Weise das Prozessgas abgekühlt (Figur 2). Das Kühlen oder Erwärmen mittels der Temperiereinrichtung ist abhängig vom gewünschten Bearbeitungsergebnis und möglichen nachfolgenden Bearbeitungsschritten.

Das gekühlte Prozessgas wird dann der Prozesskammer 2 zugeführt. Durch Zuführung des gekühlten Prozessgases ist die Temperatur des Herzustellenden Bauteils beeinflussbar.

Auf diese Weise lässt sich die Temperatur des Bauteils optimal einstellen.

Die Temperiereinrichtung kann zudem eine Ventilator- oder Düseneinrichtung zum Beschleunigen des Prozessgasstroms vor dem Eintritt in die Prozesskammer aufweisen.

Alternativ kann das Prozessgas in der Temperiereinrichtung 12 mittels der Wärmeübertragungseinrichtung 14 gekühlt oder erwärmt werden. Diesbezüglich wird auf die vorstehend genannten Wärmeübertragungseinrichtungen 14 verwiesen.

Weiterhin kann ggfs. ein Stabilisierungsschritt vorgesehen sein, in dem die Schicht abgekühlt und verfestigt wird.

### Bezugszeichenliste

- 1: Vorrichtung
- 2: Prozesskammer
- 3: Kammerwandung
- 4: Prozessraum
- 5: Bauplattform
- 6: Bauteil
- 7: Vorratsbehälter
- 8: Auftrageinrichtung
- 9: Laser
- 10: Umlenkeinrichtung
- 11: Prozessgaszuführeinrichtung
- 12: Temperiereinrichtung
- 13: Behälter
- 14: Wärmeübertragungseinrichtung
- 15: Prozessgasvorratsbehälter
- 16: Düse
- 17: Vorratsbehälter für cryogenes Medium
- 18: Temperierkammer
- 19: Steuereinrichtung

## Patentansprüche

1. Verfahren zum generativen Fertigen eines dreidimensionalen Bauteils umfassend die folgenden Schritte
- Bereitstellen eines metallischen Ausgangsmaterials,
- Zuführen eines Prozessgases zum Ausgangsmaterial,
- Schmelzen des Ausgangsmaterials mit einer Wärmequelle,
- Wiederholen der vorstehenden Schritte
**dadurch gekennzeichnet,**
**dass** das Prozessgas mittels einer Temperiereinrichtung temperiert wird, um die Temperatur des Bauteils während des Herstellens einzustellen.

2. Verfahren nach Anspruch 1,
**dadurch gekennzeichnet,**
**dass** das Prozessgas vor dem Eintritt in eine Prozesskammer, in der das Bauteil hergestellt wird, temperiert wird.

3. Verfahren nach Anspruch 1 oder 2,
**dadurch gekennzeichnet,**
**dass** das Temperieren ein Kühlen und/oder ein Erwärmen des Prozessgases umfasst.

4. Verfahren nach einem der Ansprüche 1 bis 3,
**dadurch gekennzeichnet,**
**dass** das Prozessgas in der Temperiereinrichtung mit einem Kühlmedium, bspw. einem kryogenen Medium aus einem Vorratsbehälter für kryogenes Medium, beaufschlagt wird, um dieses zu Kühlen.

5. Verfahren nach einem der Ansprüche 1 bis 4,
**dadurch gekennzeichnet,**
**dass** das Prozessgas in der Temperiereinrichtung mittels einer Wärmeübertragungseinrichtung gekühlt oder erwärmt wird.

6. Verfahren nach einem der Ansprüche 1 bis 5,
**dadurch gekennzeichnet,**
**dass** das Temperieren von einer Steuereinrichtung gesteuert wird, wobei die Steuereinrichtung eine Temperaturreglereinrichtung mit einem geschlossenen Regelkreis umfasst, wobei mittels zumindest eines Temperatursensors ein Ist-Wert einer Temperatur des Prozessgases und/oder der Prozessgasatmosphäre und/oder des Bauteils erfasst wird, mit einem vorgegebenen Sollwert verglichen wird und über ein Stellglied der vorgegebene Sollwert eingestellt wird.

7. Vorrichtung zum generativen Fertigen von dreidimensionalen Bauteilen Vorgesehen umfassend
- eine Prozesskammer,
- eine Bauplattform auf der ein metallisches Ausgangsmaterial bereitstellbar ist,
- eine Prozessgaszuführeinrichtung zum Zuführen eines Prozessgases, und
- eine Wärmequelle zum Schmelzen des Ausgangsmaterials,
**dadurch gekennzeichnet,**
**dass** eine Temperiereinrichtung zum Temperieren des Prozessgases vorgesehen ist, um die Temperatur des Bauteils während des Herstellens zu beeinflussen.

8. Vorrichtung nach Anspruch 7,
**dadurch gekennzeichnet,**
**dass** die Temperiereinrichtung eine Temperierkammer zum Temperieren des Prozessgases umfasst.

9. Vorrichtung nach Anspruch 8,
**dadurch gekennzeichnet,**
**dass** in der Temperierkammer zumindest eine Düse zum Eindüsen eines Kühlmediums vorgesehen ist, um das Prozessgas mit einem Kühlmedium, beispielsweise einem kryogenen Medium aus einem Vorratsbehälter für kryogenes Medium, zu beaufschlagen.

10. Vorrichtung nach Anspruch 7 bis 9,
**dadurch gekennzeichnet,**
**dass** die Temperiereinrichtung eine Wärmeübetragungseinrichtung zum Kühlen oder Heizen des Prozessgases umfasst und dass die Wärmeübertragungseinrichtung zur direkten Wärmeübertragung und/oder zur indirekten Wärmeübertragung und/oder zur halbindirekten Wärmeübertragung ausgebildet ist.

11. Vorrichtung nach einem der Ansprüche 7 bis 10,
**dadurch gekennzeichnet,**
**dass** eine Steuereinrichtung zum Steuern der Temperiereinrichtung vorgesehen ist, wobei die Steuereinrichtung eine Temperaturreglereinrichtung mit einem geschlossenen Regelkreis umfasst, die die Temperatur regelt.

12. Vorrichtung nach einem der Ansprüche 7 bis11,
**durch gekennzeichnet,**
dass die Temperiereinrichtung eine Ventilator- oder Düseneinrichtung zum Beschleunigen des Prozessgasstroms aufweist.
